# EUROPÄISCHE PATENTANMELDUNG

(11) **EP 1 826 437 A2**
(43) Veröffentlichungstag der Anmeldung: **29.08.2007**
(21) Anmeldenummer: 07002800.6
(22) Anmeldetag: 09.02.2007
(51) Int. Cl.: F16D 48/02

(54) **Öldruckversorgung für die Doppelkupplung eines Kraftfahrzeuges bzw. Doppelkupplungsgetriebe mit der zuvor genannten Ölversorgung**

(30) Priorität: 22.02.2006 DE 102006008242
(71) Anmelder: Volkswagen Aktiengesellschaft, 38436 Wolfsburg (DE)
(72) Erfinder: Kappel, Reinhard, 38448 Wolfsburg (DE); Becker, Volker, 38518 Gifhorn (DE)

(57) **Zusammenfassung**

Die Erfindung betrifft eine Öldruckversorgung für die Doppelkupplung (1) eines Kraftfahrzeuges, vzw. für die beiden Kupplungen (K1 und K2) der Doppelkupplung (1) eines Doppelkupplungsgetriebes, wobei für die erste Kupplung (K1) und für die zweite Kupplung (K2) eine gemeinsame Nabe (2) zur Anordnung auf einer Eingangswelle (3 und 4) eines Getriebes, vzw. des Doppelkupplungsgetriebes, vorgesehen ist, wobei für die Realisierung der Öldruckversorgung der ersten und zweiten Kupplung (K1 und K2) eine erste und zweite Ölzuführung 85 und 6) vorgesehen ist, wobei die erste und zweite Ölzuführung (5 und 6) als hydraulische Dreheinführung (5a und 6a) ausgebildet ist und die Nabe (2) hierfür mindestens einen zum Druckraum der ersten Kupplung (K1) führenden -ersten - Naben-Ölmittelkanal (7) und einen zum Druckraum der zweiten Kupplung führenden (K2) - zweiten - Naben-Ölmittelkanal (8) aufweist, und der erste und/oder zweite Eingangsbereich (9 und 10) des jeweiligen Naben-Ölmittelkanals (7 und 8) mit mindestens einem Dichtelement (11) abdichtend begrenzt ist bzw. sind.

Der axiale Bauraum ist dadurch minimiert, dass zur Abdichtung des ersten und/oder zweiten Eingangsbereiches (9 und 10) mindestens ein Dichtelement (11) mit einer Doppelfunktion vorgesehen ist, nämlich das Dichtelement (11) derart ausgebildet und/oder angeordnet ist, so dass eine Abdichtung des jeweiligen Eingangsbereiches (9 und 10) in axialer Richtung zu beiden Seiten des jeweiligen Eingangsbereiches (9 bzw. 10) sowie auch zusätzlich in radialer Richtung gewährleistet ist.

## Beschreibung

Die Erfindung betrifft eine Öldruckversorgung für die Doppelkupplung eines Kraftfahrzeuges, vzw. für die beiden Kupplungen der Doppelkupplung eines Doppelkupplungsgetriebes, wobei für die erste Kupplung und für die zweite Kupplung eine gemeinsamen Nabe zur Anordnung auf einer Eingangswelle eines Getriebes, vzw. des Doppelkupplungsgetriebes, vorgesehen ist, wobei für die Realisierung der Öldruckversorgung der ersten und zweiten Kupplung eine erste und zweite Ölzuführung vorgesehen ist, wobei die erste und zweite Ölzuführung als hydraulische Dreheinführung ausgebildet ist und die Nabe hierfür mindestens einen zum Druckraum der ersten Kupplung führenden - ersten - Naben-Ölmittelkanal und einen zum Druckraum der zweiten Kupplung führenden - zweiten - Naben-Ölmittelkanal aufweist, und der erste und/oder zweite Eingangsbereich des jeweiligen Naben-Ölmittelkanals mit mindestens einen Dichtelement abdichtet begrenzt ist bzw. sind. Weiterhin betrifft die Erfindung ein Doppelkupplungsgetriebe mit der zuvor genannten Öldruckversorgung.

Im Stand der Technik sind unterschiedliche Öldruckversorgungen für die Druckbeaufschlagung von Kupplungen der Getriebe bei Kraftfahrzeugen bekannt. Insbesondere ist eine Öldruckversorgung einer Doppelkupplung bekannt, bei der für die erste Kupplung und für die zweite Kupplung jeweils eine erste und zweite Ölzuführung vorgesehen ist. Die Doppelkupplung weist einen Kupplungskorb auf, der teilweise wie auch Komponenten der beiden Kupplungen mit einer Nabe verbunden ist. Die für beide Kupplungen vorgesehene gemeinsame Nabe ist im wesentlichen auf der äußeren Eingangswelle eines Doppelkupplungsgetriebes angeordnet, wobei die erste und zweite Ölzuführung über diese Nabe realisiert sind, nämlich die Nabe einen ersten Naben-Ölmittelkanal und einen zweiten Naben-Ölmittelkanal aufweist. Der erste Naben-Ölmittelkanal führt zum Druckraum der ersten Kupplung und der zweite Naben-Ölmittelkanal führt zum Druckraum der zweiten Kupplung. Diese erste und zweite Ölzuführung ist jeweils als hydraulische Dreheinführung ausgebildet. Hierzu liegt vzw. der erste Naben-Ölmittelkanal um 90° versetzt zum zweiten Naben-Ölmittelkanal innerhalb der Nabe, wobei die beiden Eingangsbereiche des jeweiligen Naben-Ölmittelkanals sequentiell hintereinander in radialen Bereich der Nabe angeordnet bzw. vorgesehen sind. Abgedichtet sind diese Eingangsbereiche des ersten und zweiten Naben-Ölmittelkanals über zwei entsprechende rechts und links beidseitig des jeweiligen Eingangsbereiches angeordnete Dichtelemente, die vzw. als Kolbenringe ausgebildet sind und innerhalb einer spezifisch ausgebildeten Nut am seitlichen Randbereich des jeweiligen Eingangsbereichen angeordnet sind. Diese Dichtelemente stehen radial in Kontakt mit einem Trennblech bzw. einer Wandung und werden innerhalb der Nut geführt bzw. in axialer Richtung durch die entsprechenden Wandungen der Nut rechts und links jeweils abgestützt.

Aufgrund der Ausbildung der jeweiligen Eingangsbereiche, der Nuten und der separat links und rechts seitlich neben den Eingangsbereichen vorgesehenen Dichtelementen weist die Nabe und damit auch die Doppelkupplung eine bestimmte axiale Länge auf, was zu einem erhöhten Bauraumbedarf führt, und nicht optimal ist. Dazu trägt auch die Anordnung bzw. Ausbildung der entsprechenden Naben-Ölmittelkanäle innerhalb der Nabe bei, wodurch die Nabe auch eine zusätzliche entsprechende Dicke aufweisen muss.

Der Erfindung liegt daher die Aufgabe zugrunde, die zuvor genannte Öldruckversorgung bzw. das zuvor genannte Doppelkupplungsgetriebe derart auszugestalten und weiterzubilden, dass der Bauraumbedarf für die Doppelkupplung im wesentlichen verringert ist, insbesondere der axiale Bauraumbedarf verkürzt und damit verbessert ist.

Die zuvor aufgezeigte Aufgabe ist nun dadurch gelöst, dass zur Abdichtung des ersten und/oder zweiten Eingangsbereiches mindestens ein Dichtelement mit einer Doppelfunktion vorgesehen ist, nämlich das Dichtelement derart ausgebildet und/oder angeordnet ist, so dass eine Abdichtung des jeweiligen Eingangsbereiches in axialer Richtung zu beiden Seiten des jeweiligen Eingangsbereiches und sowie auch zusätzlich in radialer Richtung gewährleistet ist. Weiterhin ist die zuvor aufgezeigte Aufgabe dadurch gelöst, dass ein Doppelkupplungsgetriebe eine Öldruckversorgung der zuvor genannten Art aufweist.

Dadurch, dass nun zur Abdichtung des ersten und/oder zweiten Eingangsbereiches ein Dichtelement mit einer Doppelfunktion vorgesehen ist und die Doppelfunktion so ausgebildet ist, dass das Dichtelement sowohl eine Abdichtung des jeweiligen Eingangsbereiches in axialer Richtung rechts und links seitlich des jeweiligen Eingangsbereiches gewährleistet. Die Dichtelemente können nun in spezifischer Form und Weise so ausgebildet werden, dass der axiale Bauraum verkürzt ist und damit ein axial relativ kurz ausgebildetes Doppelkupplungsgetriebe bzw. eine entsprechende Doppelkupplung realisiert werden kann. Insbesondere dadurch, dass das Dichtelement von zwei außen liegende verdichte Dichtbereiche aufweist, die durch einen Steg miteinander verbunden sind, wird eine axiale Abdichtung einerseits realisiert, andererseits auch eine axiale Abstützung dieser beiden verdickten Dichtbereiche zueinander realisiert, nämlich durch den diese verdickten Dichtbereiche verbindenden Steg. Dadurch kann die entsprechende Nut, die bisher ursprünglich notwendig war in der bisher üblichen Form entfallen, insbesondere also eine Nut entfallen die zwei seitliche Begrenzungswandungen aufweist, um ein Dichtelement, nämlich den bisher bekannten Kolbenring aufzunehmen. Die bisherige Abstützfunktion der einen Seitenwandung der bisher vorgesehenen Nut ist nun nicht mehr notwendig, da das Dichtelement selbst so ausgebildet ist, so dass eine Abdichtung und eine Abstützung des Dichtelementes in dem jeweiligen Eingangsbereich in axialer Richtung seitlich rechts und links gewährleistet ist. Dadurch sind die eingangs genannten Nachteile vermieden und entsprechende Vorteile erzielt.

Es gibt nun eine Vielzahl von Möglichkeiten die erfindungsgemäße Öldruckversorgung bzw. das erfindungsgemäße Doppelkupplungsgetriebe in vorteilhafter Art und Weise auszugestalten und weiterzubilden. Hierfür darf zunächst auf die dem Patentanspruch 1 nachangeordneten Patentansprüche bzw. auch auf den Patentanspruch 11 verwiesen werden. Im folgenden soll nun ein bevorzugtes Ausführungsbeispiel der Erfindung anhand der folgenden Zeichnung und der dazu gehörenden Beschreibung näher erläutert werden. In der Zeichnung zeigt:

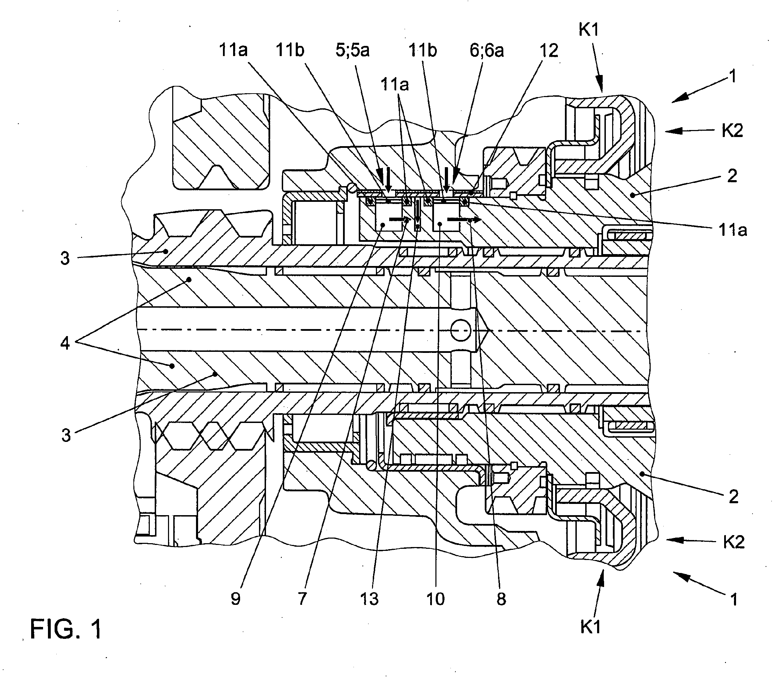

- Fig. 1: in schematischer Darstellung eine Öldruckversorgung für die Doppelkupplung eines Kraftfahrzeugs mit den hier dargestellten ersten und zweiten Ölzuführungen in der Nabe der Doppelkupplung.

Die Fig. 1 zeigt eine Öldruckversorgung für die Doppelkupplung 1 eines nur teilweise dargestellten Doppelkupplungsgetriebes eines nicht dargestellten Kraftfahrzeuges, nämlich vzw. für die beiden Kupplungen K1 und K2 des hier teilweise dargestellten Doppelkupplungsgetriebes.

Für die erste Kupplung K1 und für die zweite Kupplung K2 ist eine gemeinsame Nabe 2 zur Anordnung auf einer Eingangswelle 3 des Getriebes, hier des Doppelkupplungsgetriebes vorgesehen. Das hier dargestellte Doppelkupplungsgetriebe weist zwei Eingangswellen, nämlich eine erste Eingangswelle 3 und eine zweite Eingangswelle 4 auf. Die erste Eingangswelle 3 ist im wesentlichen als Hohlwelle und zweite Eingangswelle 4 im wesentlichen als Vollwellle ausgebildet.

Für die Realisierung der Öldruckversorgung der ersten und zweiten Kupplung K1 und K2 ist eine erste und zweite Ölzuführung 5 und 6 vorgesehen. Hierbei ist die erste und zweite Ölzuführung 5 und 6 als hydraulische Dreheinführung 5a und 6a ausgebildet.

Die Nabe 2 weist zur Realisierung des Ölflusses mindestens eine zum Druckraum der ersten Kupplung K1 führenden - ersten - Naben-Ölmittelkanal 7 und eine zum Druckraum der zweiten Kupplung K2 führenden - zweiten - Naben-Ölmittelkanal 8 auf. Die beiden Naben-Ölmittelkanäle 7 und 8 sind hier nicht explizit dargestellt, aber durch die entsprechenden Pfeile schematisch angedeutet. Weiterhin weist der erste Naben-Ölmittelkanal 7 einen ersten Eingangsbereich 9 und der zweite Naben-Ölmittelkanal 8 einen zweiten Eingangsbereich 10 auf. Die jeweiligen Eingangsbereiche 9 und 10 sind nun mit mindestens einem Dichtelement 11 abdichtend vzw. seitlich begrenzt.

Die Fig. 1 zeigt hier, dass die hydraulischen Dreheinführungen 5a und 6a in Reihe geschaltet sind, d.h. in axialer Richtung betrachtet sequentiell hintereinander liegen. Die eingangs beschriebenen Nachteile sind nun dadurch vermieden, dass zur Abdichtung des ersten und/oder zweiten Eingangsbereiches 9 bzw. 10 mindestens ein Dichtelement 11 mit einer Doppelfunktion vorgesehen ist, nämlich das Dichtelement 11 derart ausgebildet und/oder angeordnet ist, so dass einen Abdichtung des jeweiligen Eingangsbereiches 10 bzw. 11 in axialer Richtung zu beide Seiten des jeweiligen Eingangsbereiches (9 bzw. 10) sowie und zusätzlich in radialer Richtung gewährleistet ist. Dies ist aus der Fig. 1 deutlich zu erkennen, wobei hier jeder Eingangsbereich 9 und 10 nur ein einziges Dichtelement 11, allerdings mit einer spezifischen Form aufweist.

Die Dichtelement 11, die in den Eingangsbereichen 9 und 10 angeordnet sind, stehen radial im Kontakt mit einem Trennblech 12 der Ölzufluss zu den Eingangsbereichen 9 und 10 ist ebenfalls über die entsprechenden Feile schematisch dargestellt. Weiterhin zeigt die Fig. 1, dass die Nabe 2 der Doppelkupplung 1 auf der ersten Eingangswelle 3 des Doppelkupplungsgetriebes angeordnet, ist und das die erste Eingangswelle 3 als Hohlwelle und zweite Eingangswelle im wesentlichen als Vollwelle ausgebildet ist.

Vzw. sind die Dichtelemente 11 als Kolbenringe ausgebildet weisen aber eine spezifische Form auf, die im folgenden noch näher erläutert wird.

Die Eingangsbereiche 9 und 10 der hydraulischen Dreheinführungen 5a und 6a liegen axial hintereinander in der Nabe 2 bzw. sind hier axial hintereinanderliegend in der Nabe 2 ausgebildet. Hierbei weist jedes Dichtelement 11 zwei außen liegende verdickte Dichtbereiche 11a auf, die durch mindestens einen Steg 11b miteinander verbunden sind. Vzw. sind mehrere über den Umfang verteilte Stege 11b vorgesehen, wobei der Steg 11b bzw. die Stege 11b elastisch ausgebildet sind, aber derart ausgebildet sind, dass eine Abstützung der verdickten Dichtbereiche 11a in axialer Richtung nach rechts und links (Doppelfunktion) gegeben ist. Hierdurch bedingt kann das jeweilige Dichtelement 11 in dem jeweiligen Eingangsbereich 9 bzw. 10 in einer hierfür vorgesehenen Ausnehmung derart angeordnet werden, so dass die Dichtbereiche 11a über den jeweiligen Steg 11b sich axial abstützen, so dass eine Dichtfunktion in axialer und vzw. und zusätzlich in radialer Richtung gewährleistet ist. Es entfallen die bisher im Stand der Technik üblichen Nuten zur Anordnung von Kolbenringen zwischen zwei Wandungen. Im Ergebnis entfällt hier der axiale Bauraum für "zwei Wandungen" der bisher üblicherweise vorgesehenen Naben in einem Eingangsbereich 9 bzw. 10, so dass gemäß der Erfindung nunmehr die Nabe 2 hier im wesentlichen axial verkürzt werden kann.

Es sind nun vzw. innerhalb der Nabe 2 zwei erste und zwei zweite Naben-Ölmittelkanäle 7 und 8 vorgesehen. Hierbei ist ein erster Naben-Ölmittelkanal 7 zum zweiten Naben-Ölmittelkanal 8 um 90° zueinander versetzt innerhalb der Nabe 2 ausgebildet bzw. hier angeordnet, was aus der Fig.1 nicht ersichtlich ist.

Vzw. ist zwischen den beiden Eingangsbereichen 9 und 10 auch ein Leckagekanal 13 vorgesehen, in den Leckageöl eintreten bzw. hierüber abfließen kann, was ebenfall durch einen Pfeil dargestellt ist.

In axialer Richtung wird daher Bauraum "gewonnen", ist also die Nabe 2 in axialer Richtung verkürzt realisierbar, da im wesentlichen zwei Dichtelemente 11 angeordnet werden, die zwar kolbenringähnlich ausgebildet sind aber zwei verdickte Dichtbereiche 11a aufweisen, die jeweils durch mindestens einen, vzw. mehrere über den Umfang verteilte Stege 11b sich gegenseitig axial abstützend verbunden sind. Jedes Dichtelement 11 erfüllt daher eine "Doppelfunktion", übernimmt nämlich die Abdichtung in axialer Richtung nach links und rechts für den jeweiligen Eingangsbereich 9 bzw. 10. Hierzu sind die Stege 11b in Umfangsrichtung ausreichend steif gestaltet, so dass diese vzw. eine relative Drehung der beiden verdickten Dichtbereiche 11a zueinander vermeiden. Vzw. ist eine Druckentlastung der jeweiligen Naben-Ölmittelkanäle 7 und 8 bzw. der Eingangsbereiche 9 und 10 dadurch realisiert, dass hier Drucköl über eine Bohrung nach innen in den Leckagekanal 13 abgeführt werden kann.

Wie die Fig. 1 zeigt weisen hier nunmehr die erste Kupplung K1 bzw. die zweite Kupplung K2 zwar eine erste und zweite funktional voneinander getrennte Ölzuführung 5 und 6 auf, diese ist aber über das Trennblech 12 so ausgebildet, dass hier quasi eine "gemeinsame" hydraulische Dreheinführung für beide Kupplungen K1 und K2 realisiert ist. Hierdurch entfallen weitere Komponenten, die bisher im Stand der Technik nötig waren, insbesondere weitere Dichtelemente, wobei die Montage der erfindungsgemäßen Doppelkupplung erheblich vereinfacht ist, was wiederum Kosten einspart bzw. minimiert.

Im Ergebnis ist durch die erfindungsgemäße Öldruckversorgung auch ein Doppelkupplungsgetriebe realisierbar, dass eine entsprechende erfindungsgemäße Öldruckversorgung aufweist, bei den in axialer Richtung Bauräume einsparbar, so dass dieses vzw. dann auch in den Motorraum eines Kraftfahrzeuges optimal eingebaut werden kann. Die eingangs beschriebenen Nachteile sind daher vermieden und entsprechende Vorteile erzielt.

### Bezugszeichenliste

- 1: Doppelkupplung
- 2: Nabe
- 3: erste Eingangswelle
- 4: zweite Eingangswelle
- 5: erste Ölzuführung
- 5a: hydraulische Dreheinführung
- 6: zweite Ölzuführung
- 6a: hydraulische Dreheinführung
- 7: erste Naben-Ölmittelkanal
- 8: zweite Naben-Ölmittelkanal
- 9: erste Eingangsbereich
- 10: zweite Eingangsbereich
- 11: Dichtelement
- 11a: verdickter Dichtbereich
- 11b: Steg
- 12: Trennblech
- 13: Leckagekanal
- K1: erste Kupplung
- K2: zweite Kupplung

## Patentansprüche

1. Öldruckversorgung für die Doppelkupplung (1) eines Kraftfahrzeuges, vzw. für die beiden Kupplungen (K1) und (K2) der Doppelkupplung (1) eines Doppelkupplungsgetriebes, wobei für die erste Kupplung (K1) und für die zweite Kupplung (K2) eine gemeinsame Nabe (2) zur Anordnung auf einer Eingangswelle (3 bzw. 4) eines Getriebes, vzw. des Doppelkupplungsgetriebes, vorgesehen ist, wobei für die Realisierung der Öldruckversorgung der ersten und zweiten Kupplung (K1 und K2) eine erste und zweite Ölzuführung (5, 6) vorgesehen ist, wobei die erste und zweite Ölzuführung (5 und 6) als hydraulische Dreheinführung ( 5a und 6a) ausgebildet ist und die Nabe (2) hierfür mindestens einen zum Druckraum der ersten Kupplung (K1) führenden -ersten - Naben-Ölmittelkanal (7) und einen zum Druckraum der zweiten Kupplung führenden - zweiten - Naben-Ölmittelkanal (8) aufweist, und der erste und/oder zweite Eingangsbereich (9 und 10) des jeweiligen Naben-Ölmittelkanals (7 und 8) mit mindestens einem Dichtelement (11) abdichtend begrenzt ist bzw. sind, **dadurch gekennzeichnet, dass** zur Abdichtung des ersten und/oder zweiten Eingangsbereiches (9 und 10) mindestens ein Dichtelement (11) mit einer Doppelfunktion vorgesehen ist, nämlich das Dichtelement (11) derart ausgebildet und/oder angeordnet ist, so dass eine Abdichtung des jeweiligen Eingangsbereiches (9 und 10) in axialer Richtung zu beiden Seiten des jeweiligen Eingangsbereiches (9 bzw. 10) sowie auch zusätzlich in radialer Richtung gewährleistet ist.

2. Öldruckversorgung nach Anspruch 1, **dadurch gekennzeichnet, dass** die Nabe (2) der Doppelkupplung (1) auf der ersten Eingangswelle (3) eines Doppelkupplungsgetriebes angeordnet ist und dass die erste Eingangswelle (3) als Hohlwelle und die zweite Eingangswelle (4) im wesentlichen als Vollwelle ausgebildet ist.

3. Öldruckversorgung nach Anspruch 1 oder 2, **dadurch gekennzeichnet, dass** das Dichtelement (11) bzw. die Dichtelemente (11) als eine Art Kolbenring ausgebildet ist bzw. sind.

4. Öldruckversorgung nach einem der vorstehenden Ansprüche, **dadurch gekennzeichnet, dass** die Eingangsbereiche (9 bzw. 10) der Dreheinführungen (5a und 6a) axial hintereinander liegend in der Nabe (2) ausgebildet sind.

5. Öldruckversorgung nach einem der vorstehenden Ansprüche, **dadurch gekennzeichnet**, das Dichtelement (11) zwei außen liegende verdickte Dichtbereiche (11a) aufweist, die durch einen Steg (11b) miteinander verbunden sind.

6. Öldruckversorgung nach einem der vorstehenden Ansprüche, **dadurch gekennzeichnet, dass** mehrere über den Umfang verteilte Stege (11b) vorgesehen sind.

7. Öldruckversorgung nach einem der vorstehenden Ansprüche, **dadurch gekennzeichnet, dass** der Steg bzw. die Stege (11b) elastisch ausgebildet sind.

8. Öldruckversorgung nach einem der vorstehenden Ansprüche, **dadurch gekennzeichnet, dass** zwei erste und zwei zweite Naben-Ölmittelkanäle (7 und 8) vorgesehen sind.

9. Öldruckversorgung nach einem der vorstehenden Ansprüche, **dadurch gekennzeichnet, dass** jeweils der erste Naben-Ölmittelkanal (7) zum zweiten Naben-Ölmittelkanal (8) um 90 Grad zueinander versetzt innerhalb der Nabe (2) ausgebildet ist bzw. sind.

10. Öldruckversorgung nach einem der vorstehenden Ansprüche, **dadurch gekennzeichnet, dass** zwischen den beiden Eingangsbereichen (9 und 10) ein Leckagekanal (13) vorgesehen ist.

11. Doppelkupplungsgetriebe für ein Kraftfahrzeug, **dadurch gekennzeichnet, dass** eine Öldruckversorgung nach einem der Ansprüche 1 bis 10 vorgesehen ist.
